(19) Europäisches Patentamt

European Patent Office

Office européen des brevets

(11) **EP 1 092 943 B1**

(12) **EUROPÄISCHE PATENTSCHRIFT**

(45) Veröffentlichungstag und Bekanntmachung des Hinweises auf die Patenterteilung:
**17.11.2004  Patentblatt 2004/47**

(51) Int Cl.⁷: **G01B 11/00**, G01B 9/02, G01J 3/453, A61B 3/107

(21) Anmeldenummer: **00120888.3**

(22) Anmeldetag: **26.09.2000**

(54) **Positionsbestimmung eines Bauteils**

Position determination of a component

Détermination de position d'un élément de construction

(84) Benannte Vertragsstaaten:
**DE FR GB IT**

(30) Priorität: **15.10.1999  DE 19949760**

(43) Veröffentlichungstag der Anmeldung:
**18.04.2001  Patentblatt 2001/16**

(73) Patentinhaber:
• **Carl Zeiss**
**89518 Heidenheim (Brenz) (DE)**
Benannte Vertragsstaaten:
**DE FR IT**
• **Carl-Zeiss-Stiftung trading as Carl Zeiss**
**89518 Heidenheim (Brenz) (DE)**
Benannte Vertragsstaaten:
**GB**

(72) Erfinder:
• **von Behren, Jens, Dr.**
**86633 Neuburg/Donau (DE)**
• **Hauger, Christoph, Dr.**
**73431 Aalen (DE)**
• **Höller, Frank, Dr.**
**73434 Aalen (DE)**

(56) Entgegenhaltungen:
EP-A- 0 705 562          WO-A-96/35100
DE-A- 3 446 014          US-A- 4 681 445

**Beschreibung**

Die Erfindung betrifft eine Vorrichtung zur Positionsbestimmung eines Bauteils.

Aus der US 5,270,789 ist eine Interferometeranordnung mit einem Meßzweig und einem Referenzzweig bekannt. Im Referenzzweig ist ein weiteres Interferometer zur Variation der optischen Weglänge des Referenzstrahls vorgesehen. Beispielsweise ist im Referenzzweig eines Michelson Interferomters ein Fabry-Perot Interferometer angeordnet. Durch dieses Fabry-Perot Interferometer wird erreicht, daß der mit dem Meßstrahl zu überlagernde Referenzstrahl eine Vielzahl an Strahlenbündel, denen in Abhängigkeit von der Anzahl an Reflexionen in dem Fabry-Perot Interferometer jeweils unterschiedliche optische Wege zuzuordnen sind, umfaßt. Der Meßstrahl und der Referenzstrahl werden überlagert, wobei mittels eines zugeordneten Detektors Inteferenzerscheinungen detektierbar sind. In Abhängigkeit der Intensität einer detektierten Inteferenzerscheinung kann auf die Ordnung des interferierenden Strahlenbündels des Referenzstrahles geschlossen werden und somit auf den optischen Weg des betreffenden Strahlenbündels des Referenzzweiges geschlossen werden. Die einzelnen Strahlenbündel des Referenzzweiges weisen jeweils zur nächsten Ordnung einen konstanten Unterschied des zurückgelegten optischen Weges auf. Um Inteferenzerscheinungen zu erzeugen, ist im Meßzweig ein translatorisch beweglicher Spiegel angeordnet, der um mindestens diesen konstanten Weg zwischen zwei Ordnungen des Referenzstrahles verfahrbar ist.

Nachteilig ist bei dieser Anordnung, daß die Intensitäten der einzelnen Strahlenbündel mit zunehmender Ordnung stark abnehmen, wodurch der Bereich an unterschiedlichen optischen Weglängen, der durch die Strahlenbündel des Referenzzweig abdeckt wird, begrenzt ist. Für die Detektion von Interferenzerscheinungen mit Strahlenbündeln des Referenzstrahles höherer Ordnung ist eine empfindliche Sensorik erforderlich. Die Intensitätsunterschiede der Interferenzerscheinungen sind gerade mit zunehmender Ordnung der benachbarten Ordnungen sehr gering. Demzufolge kann eine zusätzliche Anordnungen zur Verbesserung des Signal Rauschverhältnis erforderlich sein, um einen akzeptablen Meßbereich abzudecken.

Weiterhin sind Interferometeranordnungen bekannt, die im Referenzzweig einen verfahrbaren Reflektor zur Veränderung des vom Referenzstrahl zurückzulegenden Weges aufweisen. Nachteilig ist bei solchen Anordnungen, daß die Verfahrgeschwindigkeit dieses Spiegels stark beschränkt ist. Somit können nur geringe Wegunterschiede in einer akzeptablen Zeit realisiert werden bzw. es ist für ein Abscannen eines großen Wegbereiches eine relativ große Scanndauer einzukalkulieren.

Der Erfindung lag die Aufgabe zugrunde eine Vorrichtung zu schaffen, mittels derer der von einem Referenzstrahl zurückgelegten Weges schnell über große Bereiche variiert werden kann.

Die Aufgabe der Erfindung wird durch die im Patentanspruch 1 gegebene Merkmale gelöst. Durch die Maßnahme in einem Referenzzweig reflektierende Flächen anzuordnen, die unter Beibehaltung ihrer relativen Anordnung um eine Drehachse rotierbar sind, kann die optische Weglänge des Referenzzweiges über einen großen Bereich in kurzer Zeit variiert werden. In Abhängigkeit von dem Winkel, den der Referenzstrahl mit den reflektierenden Flächen beim ersten Auftreffen auf eine reflektierende Fläche einschließt, variiert die Anzahl der Reflexionen zwischen diesen reflektierenden Flächen und demzufolge der vom Referenzstrahl zurückzulegende Weg.

Es hat sich als vorteilhaft herausgestellt den reflektierenden Flächen einen Drehantrieb zuzuordnen, durch den diese Flächen rotierend antreibbar sind. Insbesondere ist auch ein Antrieb mit einer konstanten Winkelgeschwindigkeit erforderlich, um den mit der Auswertung verbundene Aufwand gering zu halten.

Es hat sich als vorteilhaft herausgestellt, daß die reflektierenden Flächen eine Reflektivität von mindestens 90 %, vorzugsweise 99 % aufweisen. Dadurch wird gewährleistet, daß die Intensität des Referenzstrahles in Abhängigkeit von der Anzahl der Reflexionen zwischen den beiden reflektierenden Flächen nur in geringem Maße abnimmt. Dadurch wird gewährleistet, daß der Referenzstrahl bei einer hohen Anzahl an Reflexionen zwischen den reflektierenden Flächen nur eine geringfügig verringerte Intensität im Vergleich zum Referenzstrahl vor Einfall zwischen die reflektierenden Flächen aufweist.

Es hat sich als vorteilhaft herausgestellt die reflektierenden Flächen parallel im Abstand D zueinander gewandt anzuordnen. Durch den konstanten Abstand D zwischen den reflektierenden Flächen wird der Rechenaufwand minimiert, da in Abhängigkeit vom Einfallswinkel beim Einfall in den durch die reflektierenden Flächen gebildeten Strahlenleiter insbesondere bei hohen Ordnungen der Wegunterschied zwischen den Ordnungen annähernd 2 x D beträgt. Es ist die Näherung angenommen worden, daß der Kosinus des Einfallswinkels ungefähr 1 ist. Dies gilt insbesondere bei kleinen Winkeln zwischen dem einfallenden Strahl und dem Lot der reflektierenden Flächen, d.h. für den Bereich der langen für den Referenzstrahl zurückzulegenden Wege.

Es hat sich als vorteilhaft herausgestellt die Drehachse im Bereich einer vorderen Öffnung des durch die reflektierenden Flächen gebildeten Strahlleiters anzuordnen. Dadurch kann die Einkopplung des Referenzstrahles über einen großen Winkelbereich gewährleistet werden, ohne daß der Verlauf des Strahlenganges des Referenzstrahles angepaßt werden muß. Durch den Einfallswinkel wird die Anzahl der Reflexionen zwischen den reflektierenden Flächen bzw. in dem Strahlleiter vorgegeben. Somit variiert der von dem Referenzstrahl zurückzulegende optische Weg über einen großen Bereich.

Es sich als vorteilhaft herausgestellt, daß der Strahlleiter mit der Drehachse fest verbunden ist.

In einer vorteilhaften Ausführungsform ist ein Endspiegel vorgesehen, der den reflektierenden Flächen zugeordnet ist. Dieser Endspiegel ist senkrecht zum Referenzstrahl vor Einkoppelung in den Strahlenleiter angeordnet. Dadurch wird gewährleistet, daß der aus dem Strahlleiter austretende Strahl durch Reflexion an den Endspiegel in sich zurückreflektiert wird. Ist die Winkelgeschwindigkeit des Strahlleiters gering, so läuft der am Endspiegel reflektierte Referenzstrahl annähernd den selben Weg durch den Strahlleiter wieder zurück.

Es hat sich als vorteilhaft herausgestellt, daß der Endspiegel translatorisch verfahrbar ist, so daß eine stufenlose Variation des optischen Weges im Referenzzweig bereitgestellt werden kann.

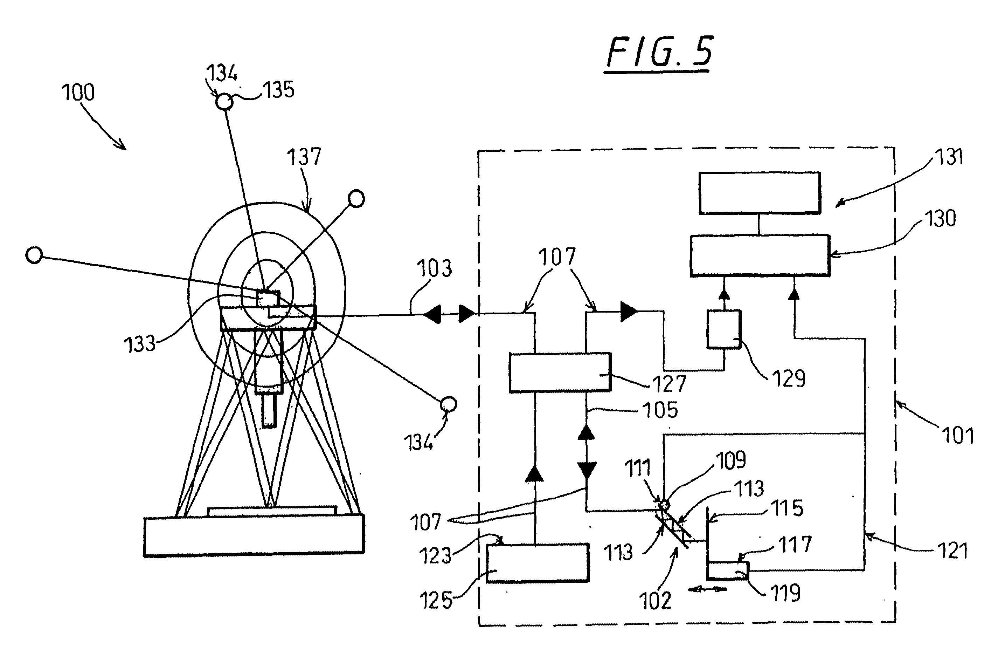

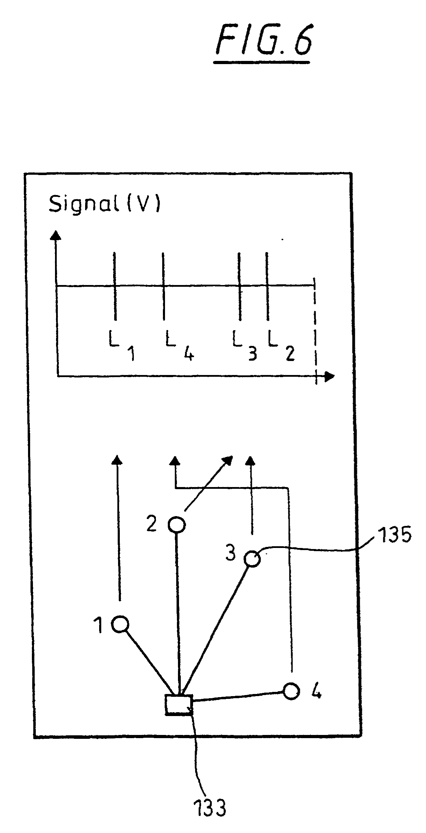

Die Erfindung wird anhand der Figuren 5, 6 näher erläutert.

Es zeigen:

Figur 1: Interferometeranordnung;

Figur 2: Drehspiegelanordung;

Figur 3: graphische Darstellung der Intensität in Abhängigkeit von der Anzahl an Reflexionen;

Figur 4: vergrößerter Ausschnitt aus Fig. 3;

Figur 5: Positionsbestimmung mittel einer Interferometeranordnung und

Figur 6: schematische Darstellung der Signalabfolge.

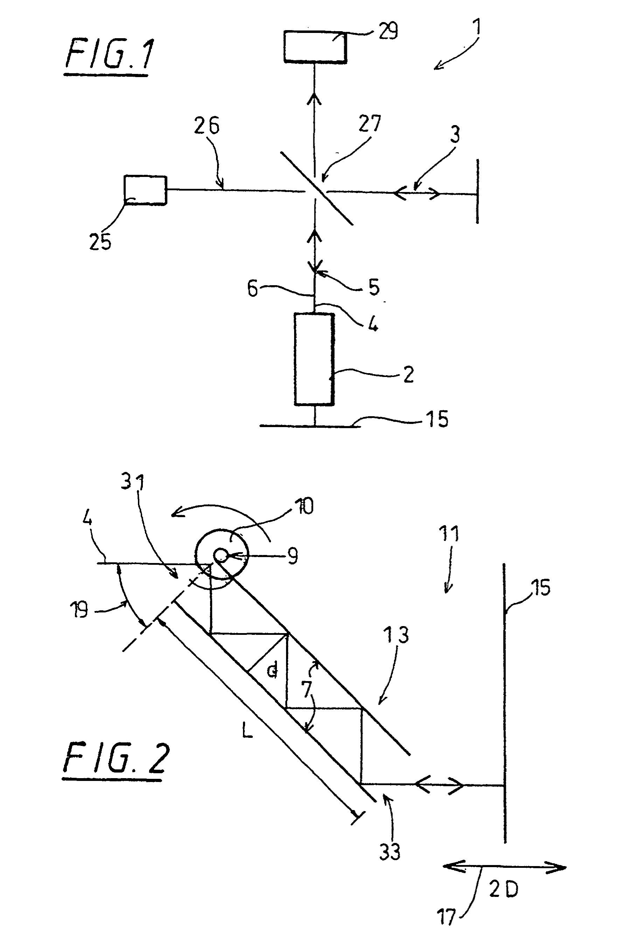

Die in Figur 1 gezeigte Interferometeranordnung 1 weist eine Strahlungsquelle 25, die Weißlicht abgibt, auf. Der von der Strahlungsquelle 25 abgegebene Strahl 26 trifft auf einen winklig im Strahlengang angeordneten Strahlenteiler 27, durch den der von der Strahlungsquelle 25 abgegeben Strahl aufgeteilt und die Teilstrahlen in einen Meßzweig 3 und in einen Referenzzweig 5 eingekoppelt werden. Vorzugsweise ist der Strahlenteiler 27 unter einem 45 ° Winkel im Strahlengang angeordnet. Die in den Referenzzweig 5 eingekoppelte Strahlung passiert eine Drehspiegelanordnung 2, die anhand von Figur 2 im folgenden näher beschrieben wird, und wird an einem Endspiegel 15 reflektiert, der senkrecht zum Strahlengang des Referenzzweiges 5 angeordnet ist. Die reflektierte Strahlung durchläuft nochmals die Drehspiegelanordnung 2 und trifft wiederum auf den Strahlenteiler 27, wobei der Anteil der Strahlung, der den Strahlenteiler passiert auf einen Detektor 29 fällt. Auf diesen Detektor 29 fällt ebenfalls die aus dem Meßzweig 3 zurücklaufende Strahlung die am Strahlenteiler 27 reflektiert wird.

Im folgenden wird anhand von Figur 2 ein Ausführungsbeispiel einer Drehspiegelanordnung 2 näher beschrieben. Diese Drehspiegelanordnung 2 weist reflektierende Flächen 7 auf. Durch diese reflektierenden Flächen 7, ein Spiegelsystem 11 bildend, ist ein Strahlleiter 13 bereitgestellt. Die reflektierenden Flächen 7 weisen jeweils eine Längenerstreckung von L auf und sind im Abstand D parallel zueinander angeordnet. Die reflektierenden Flächen 7 sind zueinander gewandt angeordnet Dispersionseffekte werden vermieden, indem zwischen den reflektierenden Flächen 7 kein Glas angeordnet ist. Einer der reflektierenden Flächen 7 ist mit einer Drehachse 9 fest verbunden, die mittels eines Drehantriebes 10 rotatorisch antreibbar ist. Durch Ansteuerung des Antriebes 10 wird das durch die reflektierenden Flächen 7 gebildete Spiegelsystem 11, wobei sich die relative Lage der reflektierenden Flächen 7 zueinander nicht ändert, in Rotation versetzt. Diesen reflektierenden Flächen 7 ist ein Endspiegel 15 zugeordnet, der senkrecht zu einem Strahl 4 des Referenzzweiges 5 angeordnet ist. Der Strahl 4 wird in das durch die reflektierenden Flächen 7 gebildete Spiegelsystem 11 eingekoppelt, wobei der aus dem Spiegelsystem 11 heraustretende Strahl parallel zum einzukoppelten Strahl 4 verläuft. Der Endspiegel 15 ist um eine Verfahrlänge von mehr als 2 * D translatorisch in Richtung des Strahls des Referenzzweiges 5 verfahrbar. Beispielsweise kann der Endspiegel 15 mittels eines Galvanometers angetrieben werden. Da die Galvonometer der üblichen Bauart einen maximalen Stellweg 7 von 1 cm erlauben, sind die reflektierenden Flächen 7 maximal mit einem Abstand von 5 mm zueinander anzuordnen. Durch vorsehen von einer Translationsbühne ist ein maximaler Stellweg des Endspiegels 15 von 20 cm erreichbar.

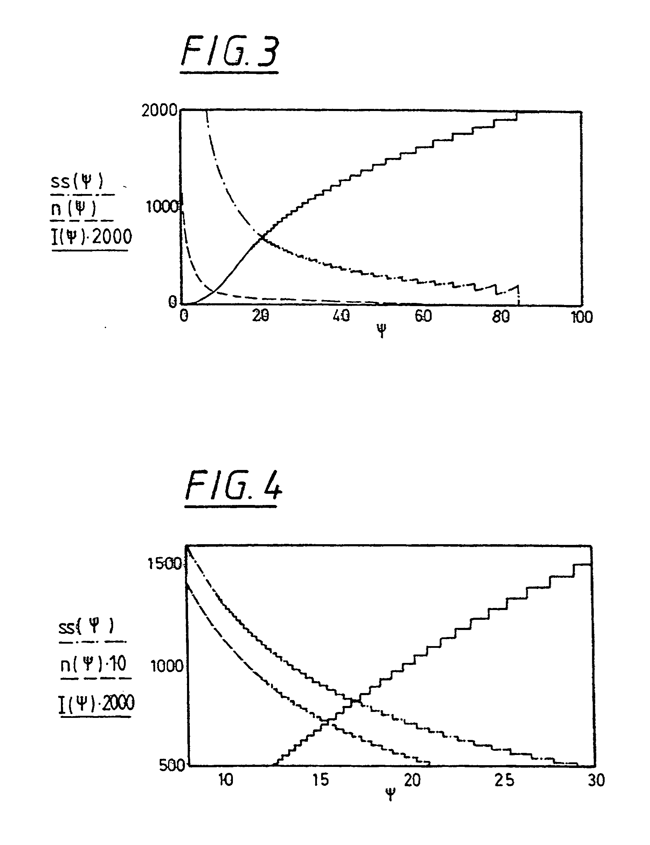

In Figur 3 und 4 ist unter Annahme einer Reflektivität der reflektierenden Platten 7 von 99% die Intensität des Strahls nach passieren der Drehspiegelanordnung 2 in beiden Richtungen graphisch dargestellt. Weiterhin ist die Anzahl der Ordnungen, der vom Referenzstrahl zurückzulegende optische Weg und die Intensität des die Drehspiegelordnung in Richtung auf den Strahlenteiler verlassenden Referenzstrahls dargestellt.

Figur 4 zeigt einen vergrößerten Ausschnitt des Einfallswinkelbereiches 19 von 12 bis 30 ° aus der Figur 3. Der zwischen den Ordnungssprüngen durch die alleinige Drehspiegelanordnung 2 nicht abgedeckte Bereich des optischen Weges wird durch die Verfahrbarkeit des Endspiegels 15 mit dem Stellweg 17 bereitgestellt. Für Winkelbereiche, in denen die Näherung von $\cos \alpha \approx 1$ nicht mehr angenommen werden kann, muß der Winkel bei der Berechnung des zurückgelegten optischen Weges mit einbezogen werden. Daraus resultiert, daß der Endspiegel um mehr als den zweifachen Abstand der reflektierenden Flächen verfahrbar sein muß. Für den optischen Weg gilt:

$$SS(\psi)=2* (S(\psi)*n(\psi)+L*(1-sin(\psi )))$$

für die Intensität gilt somit:

$$I(\psi)=0{,}99^{2*n(\psi)+1}$$

Anhand von Figur 5 wird eine Vorrichtung beschrieben, mittels derer die Position eines Bauteils mittels einer Inteferometeranordnung gemäß der vorangegangenen Beschreibung durchführbar ist. Im Anschluß an die Vorrichtungsbeschreibung wird das Verfahren zur Positionsbestimmung näher beschrieben.

Die dargestellte Vorrichtung zur Positionsbestimmung 100 mittels einer Interferometeranordnung 101 weist als Lichtquelle 123 eine Superlummineszenzdiode 125 auf. Die Superlumminenszenzdiode 125 stellt eine Weißlichtquelle dar. Die von der Superlumminenszenzdiode 125 abgegebene Strahlung wird in eine Faseroptik 107, vorzugsweise eine Monomodefaser, eingekoppelt und die Faseroptik 107 ist derart ausgewählt, daß der von der eingekoppelten Strahlung innerhalb der Faseroptik zurückgelegte optische Weg bekannt ist. Diese eingekoppelte Strahlung gelangt über die Faseroptik 107 zu einem Mixer 127, durch den diese Strahlung einerseits in einen Meßzweig 103 und andererseits in einen Referenzzweig 105 eingekoppelt wird.

Die in den Meßzweig 103 eingekoppelte Strahlung wird wiederum über eine Faseroptik 107 zu einem Sender 133 geleitet, der diese Strahlung in Form einer Kugelwelle 137 aussendet. Diesem Sender 133 ist mit dem Bauteil, dessen Position zu bestimmen ist bzw. mit einem zugeordneten Bauteil, das mit dem Bauteil, dessen Position zu bestimmen ist, in einer festen Relation steht, fest verbunden. Dem Sender 133 sind Reflektorkugeln 135 zugeordnet, durch die auftreffende Bruchteile der vom Sender 133 abgestrahlte Kugelwelle 137 jeweils zurückflektiert werden, vorzugsweise wird die auf die Reflektorkugeln 135 auftretende Strahlung durch die Reflektorkugeln 135 fokussiert. Die zurückreflektierte Strahlung wird vom Sender 133, der gleichzeitig Empfänger 134 ist, wieder in die Faseroptik 107 des Meßzweiges 103 eingekoppelt. Und gelangt somit wiederum zum Mixer 127.

Es kann auch vorgesehen sein anstelle der Reflektorkugeln 135 Empfänger vorzusehen und die aufgenommene Strahlung dem Mixer 127 zuzuführen.

Die in den Referenzzweig 105 eingekoppelte Strahlung wird über Faseroptik 107 in eine der bereits zuvor beschriebene Drehspiegelanordnung 2 entsprechende Drehspiegelanordnung 102 eingekoppelt. Diese Drehspiegelanordnung 102 weist eine Drehachse 109 auf, wobei die Spiegel 113 der Drehspiegelanordnung 2 mittels eines zugeordneten Antriebes 110 rotatorisch angetrieben werden. Der für den Drehantrieb der Drehspiegelanordnung 102 vorgesehene Antrieb 111 wird durch eine Steuerungseinrichtung 130 angesteuert. Die aus den drehenden Spiegeln 113 austretende Strahlung trifft auf einen zugeordneten Endspiegel 115 der senkrecht zu der in die Drehspiegelanordnung 102 eingekoppelten Strahlung angeordnet ist, und wird von diesem Spiegel 115 zurückflektiert. Dieser Endspiegel 115 ist mittels eines zugeordneten Antriebes 117, vorzugsweise mittels eines Galvanometers 119, translatorisch antreibbar. Durch diesen zugeordneten Antrieb 117 wird mindestens ein Hub von dem zweifachen Abstand der parallel zueinander angeordneten Spiegel 113 der Drehspiegelanordnung 102 gewährleistet. Die jeweilige Position des Endspiegels 115 wird über eine Signalleitung 121, mittels derer dieser Antrieb 117 auch ansteuerbar ist, einer Auswerteeinrichtung 131 zugeführt. Die Ansteuerung des Antriebes 117 wird genauso wie die Ansteuerung des Antriebes 111 durch die Steuereinrichtung 130 veranlaßt. Es kann auch vorgesehen sein die Steuereinrichtung 130 als Einheit mit einer Auswerteeinrichtung 131 auszuführen.

Die von dem Endspiegel 115 zurückreflektierte Strahlung wird über die Spiegel 113 wiederum in die Faseroptik 107 des Referenzzweiges 105 eingekoppelt und gelangt über diese Faseroptik 107 wiederum zum Mixer 127. In dem Mixer 127 wird die vom Meßzweig 103 zurücklaufende Strahlung mit der vom Referenzzweig 105 zurückgelaufenen Strahlung überlagert. Dem Mixer 127 ist ein Detektor 129 zugeordnet, durch den ein interferieren der überlagerten Strahlung, detektiert wird. Aus den detektierten Interferenzerscheinungen sind die Laufzeiten vom Sender 133 zu den Reflektorkugeln 135 und zurück ableitbar. Vorzugweise sind mindestens 4 Reflektorkugeln 135 vorgesehen, so daß aus diesen Signalen die Position des zu bestimmenden Bauteiles exakt ermittelbar ist. Durch die Drehspiegelanordnung 102 wird ständig der Bereich, in dem sich das zu bestimmende Bauteil befinden kann durch Erzeugung eines entsprechenden von der Strahlung im Referenzzweig zurückzulegenden Weges, abgescannt.

Eine Abgleichung zwischen den durch die Faseroptik im Referenzzweig 105 und im Meßzweig 103 begründeten optische Wege kann mittels am Sender 133 zurückreflektierter Strahlung, die somit die Faseroptik 107 nicht verlassen hat, ermittelt bzw. abgeglichen werden.

Es kann auch vorgesehen sein die vom Sender 133 ausgesendete Kugelwelle 137 mit einer Vorzugsrichtung zu versehen, so daß die Amplitude der Kugelwelle in Abhängigkeit vom Raumwinkel variiert. Aus ermitteltem Laufzeitsignal und der Intensität der Interferenzerscheinung kann somit über den Abstand vom Sender 133 zur Reflektorkugel 135 hinaus auch noch auf den Raumwinkel, in dem sich die Reflektorkugel 135 in bezug aus den Sender 133 befindet geschlossen werden.

Unter Einbeziehung der Intensität, wobei die abgestrahlte Kugelwelle 137 eine Vorzugsrichtung aufweist, kann die Position des zu bestimmenden Bauteiles in einem vorbestimmten Raumvolumen mittels drei Reflektorkugeln 135 eindeutig bestimmt werden. Eine unsymmetrische Anordnung der Reflektorkugeln 135 hat sich als vorteilhaft herausgestellt, um die Anzahl an erforderlichen Reflektorkugeln 135, die zur Bestimmung der exakten Position des zu bestimmenden Bauteils bzw. des Sender 133 erforderlich sind, zu minimieren. Es kann auch vorgesehen sein solch eine Interferometeranordnung 101 für eine exakte Positionsbestimmung, wobei die ungefähre Position des zu bestimmenden Bauteiles bereits bekannt ist, zu verwenden.

In Figur 6 ist eine eine mögliche Signalabfolge von detektierten Interferenzerscheinungen schematisch dargestellt. Das Signal L 1 geht dabei auf den mit 1 bezifferte Reflektorkugel 135 zurück. Das zeitlich zuerst detektierte Interferenzereignis L 1 entspricht dem da kürzesten Abstand zwischen Sender 133 und einer Reflektorkugel 135. Entsprechend dem Abstand zwischen der Reflektorkugel 135 und dem Sender 133 werden die Interferenzereignisse in zeitliche Abfolge detektiert.

Die Verwendung einer Drehspiegelanordnung 2, 102 in einer Vorrichtung zur lokalen Positionsbestimmung ist eine mögliche Verwendung. Die Drehspiegelanordnung ist nicht beschränkt auf solch eine Verwendung zu sehen.

**Patentansprüche**

1. Vorrichtung zur Positionsbestimmung eines Bauteils, umfassend

   a) eine Interferometeranordnung (1, 101) mit einer Lichtquelle (123) zur Erzeugung eines Strahls, der über einen Mixer (127) in einen Referenzzweig (105) und einen Messzweig (103) einkoppelbar ist, wobei der Referenzzweig eine Drehspiegelanordnung (2, 102) in Form zweier zueinander gewandt angeordneter reflektierender Flächen (7, 107) aufweist, die unter Beibehaltung ihrer relativen Anordnung um eine Drehachse rotierbar sind,

   b) einen mit dem Bauteil fest verbundenen Sender (133) zur Aussendung einer über den Messzweig (103) zugeleiteten Messstrahlung in Form einer Kugelwelle (137) zu einem Empfänger (134), wobei der Empfänger (134) dazu ausgebildet ist, die empfangene Strahlung über den Messzweig (103) wieder dem Mixer (127) zuzuleiten, und

   c) einen Detektor zur Detektion eines Interferierens der in dem Mixer (127) überlagerten zurücklaufenden Strahlung aus dem Messzweig (103) und dem Referenzzweig (105).

2. Vorrichtung nach Anspruch 1, **dadurch gekennzeichnet, dass** Reflektorkugeln (135) zur Reflektion auftreffender Bruchteile der vom Sender (133) abgestrahlten Kugelwelle (134) auf den Empfänger (134) vorgesehen sind.

3. Vorrichtung nach Anspruch 1 oder 2, **dadurch gekennzeichnet, dass** als Lichtquelle (123) ein Superlumineszenzdiode (125) vorgesehen ist.

4. Vorrichtung nach einem der vorhergehenden Ansprüche, **dadurch gekennzeichnet, dass** die Strahlung im Referenzzweig (105) und Messzweig (103) in Faseroptiken (107), vorzugsweise Faseroptiken aus Monomodfasem, geführt ist.

5. Vorrichtung nach einem der Ansprüche 2 bis 4, **dadurch gekennzeichnet, dass** die Reflektorkugeln (135) zur Fokussierung der auftretenden Strahlung ausgebildet sind.

6. Vorrichtung nach einem der vorangegangenen Ansprüchen, **dadurch gekennzeichnet, dass** den reflektierenden Flächen (7, 107) der Drehspiegelanordnung (2, 102) ein Drehantrieb (101) zugeordnet ist.

7. Vorrichtung nach einem der Ansprüche 1 bis 5, **dadurch gekennzeichnet dass** die reflektierenden Flächen (7, 107) der Drehspiegelanordnung (2, 102) eine Reflektivität von mindestens 90 % aufweisen.

8. Vorrichtung zur Positionsbestimmung eines Bauteils, umfassend eine Drehspiegelanordnung (2, 102) nach einem der vorangegangenen Ansprüche, wobei die reflektierenden Flächen zueinandergewandt mit konstantem Abstand und parallel zueinander angeordnet sind, **dadurch gekennzeichnet, dass** durch die reflektierenden Flächen (7, 107) ein Strahlleiter (13) gebildet wird, der eine vordere Öffnung (31) und eine hintere Öffnung (33) aufweist, wobei die Drehachse (9) im Bereich der vorderen Öffnung (31) angeordnet ist.

9. Vorrichtung nach einem der vorangegangenen Ansprüche, **dadurch gekennzeichnet, dass** der Strahlenleiter (13) der Drehspiegelanordnung (2, 102) mit der Drehachse (9) fest verbunden ist.

10. Vorrichtung nach einem der vorangegangenen Ansprüche, **dadurch gekennzeichnet, dass** den reflektierenden Flächen (7,107) der Drehspiegelanordnung (2, 102) ein Endspiegel (15, 115) zugeordnet ist, der senkrecht zu dem Strahl des Referenzzweiges (5, 105), der in den Strahlleiter (13) eingekoppelt wird bzw. zwischen den Spiegeln (113) reflektiert wird, angeordnet ist.

11. Vorrichtung nach einem der vorangegangenen Ansprüche, **dadurch gekennzeichnet, dass** der Endspiegel (15, 115) der Drehspiegelanordnung (2, 102) translatorisch bewegbar angeordnet ist.

12. Vorrichtung nach einem der vorangegangenen Ansprüche, **dadurch gekennzeichnet, dass** der Endspiegel (15, 115) der Drehspiegelanordnung (2, 102) mindestens um den Stellweg (17, 117) 2 * D senkrecht zum einzukoppelnden Strahl verfahrbar ist, wobei D der maximale Abstand zwischen den reflektierenden Flächen (7, 117) ist.

13. Vorrichtung nach einem der vorangegangenen Ansprüche, **dadurch gekennzeichnet, dass** der Endspiegel (15, 115) der Drehspiegelanordnung (2, 102) stufenlos verfahrbar ist.

14. Vorrichtung nach einem der vorangegangenen Ansprüche, **dadurch gekennzeichnet, dass** der Endspiegel mittels eines Galvanometers, insbesondere unter Einbeziehung einer Translationsbühne, verfahrbar ist.

15. Vorrichtung nach einem der vorangegangenen Ansprüche, **dadurch gekennzeichnet, dass** als Einfallswinkelbereich (19) des Strahls (4) in den Strahlleiter (13) 12° bis 30° vorgesehen sind.

**Claims**

1. Apparatus for finding the position of a component, comprising

    a) an interferometer arrangement (1, 101) having a light source (123) for production of a beam, which can be injected via a mixer (127) into a reference branch (105) and into a measurement branch (103), with the reference branch having a rotating mirror arrangement (2, 102) in the form of two reflective surfaces (7, 107) which are arranged such that they face one another and can be rotated about a rotating shaft while maintaining their relative arrangement,

    b) a transmitter (133), which is firmly connected to the component, for transmission of measurement radiation, which is passed via the measurement branch (103), in the form of a spherical wave (137) to a receiver (134), with the receiver (134) being designed to pass the received radiation via the measurement branch (103) to the mixer (127) again, and

    c) a detector for detection of interference of the returning radiation, which is superimposed in the mixer (127), from the measurement branch (103) and from the reference branch (105).

2. Apparatus according to Claim 1, **characterized in that** reflector spheres (135) are provided for reflection of incident fractions of the spherical wave (137), which is emitted from the transmitter (133), onto the receiver (134).

3. Apparatus according to Claim 1 or 2, **characterized in that** a superluminescence diode (125) is provided as the light source (123).

4. Apparatus according to one of the preceding claims, **characterized in that** the radiation is guided in the reference branch (105) and in the measurement branch (103) using fibre optics (107), preferably fibre optics composed of monomode fibres.

5. Apparatus according to one of Claims 2 to 4, **characterized in that** the reflector spheres (135) are designed to focus the incident radiation.

6. Apparatus according to one of the preceding claims, **characterized in that** the reflective surfaces (7, 107) of the rotating mirror arrangement (2, 102) have an associated rotary drive (101).

7. Apparatus according to one of Claims 1 to 5, **characterized in that** the reflective surfaces (7, 107) of the rotating mirror arrangement (2, 102) have a reflectivity of at least 90%.

8. Apparatus for finding the position of a component, comprising a rotary mirror arrangement (2, 102) according to one of the preceding claims, with the reflective surfaces being arranged at a constant distance apart, parallel to one another and facing one another, **characterized in that** the reflective surfaces (7, 107) form a beam conductor (13), which has a front opening (31) and a rear opening (33), with the rotating shaft (9) being arranged in the area of the front opening (31).

9. Apparatus according to one of the preceding claims, **characterized in that** the beam conductor (13) of the rotary mirror arrangement (2, 102) is firmly connected to the rotating shaft (9).

10. Apparatus according to one of the preceding claims, **characterized in that** the reflective surfaces (7, 107) of the rotating mirror arrangement (2, 102) have an associated end mirror (15, 115), which is arranged at right angles to the beam of the reference branch (5, 105), which is injected into the beam conductor (13) and is reflected between the mirrors (113).

11. Apparatus according to one of the preceding claims, **characterized in that** the end mirror (15, 115) of the rotating mirror arrangement (2, 102) is arranged such that it can be moved translationally.

12. Apparatus according to one of the preceding claims, **characterized in that** the end mirror (15, 115) of the rotating mirror arrangement (2, 102) can be moved at least through the adjustment distance (17, 117) 2 * D at right angles to the beam to be injected, D being the maximum distance between the reflective surfaces (7, 117).

13. Apparatus according to one of the preceding claims, **characterized in that** the end mirror (15, 115) of the rotating mirror arrangement (2, 102) can be moved infinitely variably.

14. Apparatus according to one of the preceding claims, **characterized in that** the end mirror can be moved by means of a galvanometer, in particular including a translation platform.

15. Apparatus according to one of the preceding claims, **characterized in that** the incidence angle range (19) for the beam (4) into the beam conductor (13) is 12° to 30°.

**Revendications**

1. Dispositif en vue de la détermination de la position d'un élément de construction, comprenant

   a) un agencement d'interféromètres (1, 101) avec une source de lumière (123) en vue de la génération d'un rayon qui peut être alimenté par l'intermédiaire d'un mélangeur (127) dans une branche de référence (105) et une branche de mesure (103), la branche de référence présentant un agencement de miroirs tournants (2, 102) sous la forme de deux surfaces réfléchissantes (7, 107) agencées de façon tournée l'une vers l'autre qui peuvent tourner en conservant leur agencement relatif autour d'un axe de rotation,
   b) un émetteur (133) relié fixement à l'élément de construction en vue de l'émission d'un rayonnement de mesure acheminé par l'intermédiaire de la branche de mesure (103) sous la forme d'une onde sphérique (137) vers un récepteur (134), le récepteur (134) étant réalisé à cet effet pour acheminer le rayonnement reçu par l'intermédiaire de la branche de mesure (103) de nouveau au mélangeur (127), et
   c) un détecteur en vue de la détection d'une interférence du rayonnement retournant en arrière superposé dans le mélangeur (127) provenant de la branche de mesure (103) et de la branche de référence (105).

2. Dispositif selon la revendication 1, **caractérisé en ce que** des sphères à réflecteurs (135) sont prévues en vue de la réflexion de fractions incidentes de l'onde sphérique (137) émise par l'émetteur (133) sur le récepteur (134).

3. Dispositif selon la revendication 1 ou 2, **caractérisé en ce qu'**une diode super luminescente (125) est prévue en tant que source de lumière (123).

4. Dispositif selon l'une quelconque des revendications précédentes, **caractérisé en ce que** le rayonnement est guidé dans la branche de référence (105) et la branche de mesure (103) dans des optiques sur fibres (107), de préférence des optiques sur fibres en fibres monomodales.

5. Dispositif selon l'une quelconque des revendications 2 à 4, **caractérisé en ce que** les sphères à réflecteurs (135) sont réalisées en vue de la focalisation du rayonnement incident.

6. Dispositif selon l'une quelconque des revendications précédentes, **caractérisé en ce qu'**un entraînement en rotation (101) est associé aux surfaces réfléchissantes (7, 107) de l'agencement de miroirs tournants (2, 102).

7. Dispositif selon l'une quelconque des revendications 1 à 5, **caractérisé en ce que** les surfaces réfléchissantes (7, 107) de l'agencement de miroirs tournants (2, 102) présentent une réflectivité d'au moins 90 %.

8. Dispositif en vue de la détermination de la position d'un élément de construction, comprenant un agencement de miroirs tournants (2, 102) selon l'une quelconque des revendications précédentes, les surfaces réfléchissantes étant agencées de façon tournée l'une vers l'autre à écartement constant et parallèlement l'une à l'autre, **caractérisé en ce qu'**un conducteur de rayons (13) qui présente une ouverture avant (31) et une ouverture arrière (33) est formé par les surfaces réfléchissantes (7, 107), l'axe de rotation (9) étant agencé dans la région de l'ouverture avant (31).

9. Dispositif selon l'une quelconque des revendications précédentes, **caractérisé en ce que** le conducteur de rayons (13) de l'agencement de miroirs tournants (2, 102) est relié fixement à l'axe de rotation (9).

10. Dispositif selon l'une quelconque des revendications précédentes, **caractérisé en ce qu'**un miroir final (15, 115) qui est agencé perpendiculairement au rayon de la branche de référence (5, 105) qui est alimenté dans le conducteur de rayons (13) ou est réfléchi entre les miroirs (113), est associé aux surfaces réfléchissantes (7, 107) de l'agencement de miroirs tournants (2, 102).

11. Dispositif selon l'une quelconque des revendications précédentes, **caractérisé en ce que** le miroir final (15, 115) de l'agencement de miroirs tournants (2, 102) est agencé de manière mobile en translation.

12. Dispositif selon l'une quelconque des revendications précédentes, **caractérisé en ce que** le miroir final (15, 115) de l'agencement de miroirs tournants (2, 102) est déplaçable au moins de la course de réglage (17, 117) 2 * D perpendiculairement au rayon à alimenter, D étant l'écartement maximal entre les surfaces réfléchissantes (7, 117).

13. Dispositif selon l'une quelconque des revendications précédentes, **caractérisé en ce que** le miroir final (15, 115) de l'agencement de miroirs tournants (2, 102) est déplaçable progressivement.

14. Dispositif selon l'une quelconque des revendications précédentes, **caractérisé en ce que** le miroir final est déplaçable au moyen d'un galvanomètre, notamment en incorporant une plateforme de translation.

15. Dispositif selon l'une quelconque des revendications précédentes, **caractérisé en ce que** 12° à 30° sont prévus en tant que région d'angle d'incidence (19) du rayon (4) dans le conducteur de rayons (13).

_FIG.1_

29

1

26

27

3

25

5

6

4

2

15

31

4

10

9

19

13

11

15

d

7

L

_FIG. 2_

33

17

2D

# FIG. 3

$$\frac{ss(\Psi)}{n(\Psi)}$$
$$\overline{I(\Psi) \cdot 2000}$$

# FIG. 4

$$\frac{ss(\Psi)}{n(\Psi) \cdot 10}$$
$$\overline{I(\Psi) \cdot 2000}$$

FIG. 5

# FIG.6